# EUROPEAN PATENT SPECIFICATION

(11) **EP 2 773 881 B1**
(45) Date of publication and mention of the grant of the patent: **22.03.2017**
(21) Application number: 13826628.3
(22) Date of filing: 18.12.2013
(51) Int. Cl.: F16D 65/12

(54) **METHOD OF MAKING A BRAKE DISC AND BRAKE DISC FOR DISC BRAKES**
VERFAHREN ZUR HERSTELLUNG EINER BREMSSCHEIBE UND BREMSSCHEIBE FÜR SCHEIBENBREMSEN
PROCÉDÉ DE FABRICATION D'UN DISQUE DE FREIN ET DISQUE DE FREIN POUR FREINS À DISQUE

(30) Priority: 21.12.2012 IT PD20120405
(43) Date of publication of application: 10.09.2014
(73) Proprietor: Freni Brembo S.p.A., 24035 Curno (IT)
(72) Inventor: TIRONI, Giovanni Mario, I-24035 Curno (Bergamo) (IT); CARMINATI, Fabiano, I-24035 Curno (Bergamo) (IT); CAVALLI, Lorenzo, I-24035 Curno (Bergamo) (IT)
(74) Representative: Zanettin, Gianluigi
(86) International application number: PCT/IB2013/061105
(87) International publication number: WO 2014/097187

(56) References cited:
- WO-A1-2007/043961
- WO-A1-2010/089047
- US-A1- 2009 317 642

## Description

### FIELD OF APPLICATION

The present invention relates to a method of making a brake disc and brake disc for disc brakes.

Such a method and disc brake is disclosed in WO-A-2010/089047.

### STATE OF THE ART

A brake disc of a disc braking system of a vehicle comprises an annular structure or braking band and a central attachment element, known as a bell , by means of which the disc is fastened to the rotating part of a vehicle suspension, for example a hub. The braking band is provided with opposite braking surfaces suitable for co-operating with friction elements (brake pads), housed in at least one caliper body placed astride said braking band and integral with a non-rotating component of the vehicle suspension. The interaction commanded between the opposite brake pads and the counterposed braking surfaces of the braking band determine a braking action as a result of friction, which permits the deceleration or stopping of the vehicle.

Generally, the brake disc is made of grey cast iron or steel. These materials in fact permit the achievement of a good braking performance at relatively contained costs. Discs made of carbon or carbon-ceramic materials offer decidedly superior performance but at much higher costs.

The limitations of traditional discs, in cast iron or steel, are related to their excessive wear. As regards discs in grey cast iron another very negative aspect is related to the excessive surface oxidation with consequent formation of rust. This aspect influences both the performance of the brake disc and it appearance, in that rust on the brake disc is aesthetically unacceptable to the user. Such problems have been tackled by making discs in grey cast iron or steel with a protective coating. The protective coating on the one hand reduces wear on the disc and on the other protects the grey cast iron base from surface oxidation, thereby preventing the formation of a layer of rust. The protective coatings available and applied to discs up to today, despite offering resistance to wear, are however subject to flaking determining the detachment thereof from said disc.

One protective coating of this kind is described in the patent US 4,715,486, relative to a low-wear disc brake. The disc, made from cast iron, has a coating made with a material in particle form deposited on the disc using a high kinetic energy impact technique. According to a first embodiment, the coating contains from 20% to 30% of tungsten carbide and 5% of nickel with the remainder consisting of a mixture of chromium and tungsten carbides. According to a second embodiment, the coating contains from 80% to 90% of tungsten carbide, up to 10% of cobalt, up to 5% of chromium and up to 5% of carbon.

It has been seen that one of the main causes of detachment of the traditional protective coatings from discs in the case of application of the coating using plasma spray techniques is the presence of free carbon in the protective coating. In fact, carbon tends to burn, combining with the oxygen incorporated in the protective coating being formed. This leads to the formation of micro bubbles inside the coating, which may prevent adequate adhesion of the coating to the disc, favouring the detachment thereof.

It is evident from the above that coated discs are not currently utilisable in the braking systems sector.

Considering however the advantages deriving from the application of a surface layer to the brake discs, the need is deeply felt in the sector to resolve the drawbacks mentioned with reference to the prior art. In particular, the need is felt to avail of discs provided with protective coatings which are able to increase the resistance to wear of the disc, which are simultaneously resistant over time and which prevent, in the case of discs in grey cast iron, the formation of a layer of rust.

### PRESENTATION OF THE INVENTION

Such need is satisfied by a method of making a brake disc according to claim 1 and by a brake disc for disc brakes according to claim 14.

In particular, such need is satisfied by a method of making a brake disc with a protective coating comprising the following operating steps:
a) providing a brake disc, comprising a braking band, made of grey cast iron or steel and provided with two opposite braking surfaces each of which defines at least partially one of the two main sides of the disc;
b) depositing a material in particle form on the disc using a plasma spray technique denominated HVOF (High Velocity Oxygen Fuel) or HVAF technique (High Velocity Air Fuel) or KM technique (Kinetic Metallization) to form a protective coating which covers at least one of the two braking surfaces of the braking band.

The brake disc according to the present invention is less subject to wear than the standard non-coated disc and thus has a longer life. The brake disc according to the present invention, give its reduced wear, may be designed with a reduced thickness compared to the standard thickness, designed to withstand high levels of wear. As a result the overall weight of said disc is reduced. This aspect is particularly important to car manufacturers, in that it enables a reduction in the weight on the front and rear axles of the car. In general, a reduction in weight leads to a reduced consumption of hydrocarbons for motor propulsion, with consequent reduced emission into the atmosphere of gases such as carbon monoxide and dioxide, and thus reduced environmental impact compared to vehicles provided with standard brake discs.

The material in particle form is composed of 70 to 95% in weight of tungsten carbide, 5% to 15% in weight of cobalt and of 1% to 10% in weight of chromium.

Preferably, the particle size of the particles of material in particle form is between 5 and 40 µm.

According to a possible implementation of the method, the protective coating has a thickness of 20 µm to 80 µm.

According to the method, the deposition step b) comprises two or more separate deposition passages of the material in particle form on the same surface to form the protective coating, first deposition passage of the material in particle form to create a base layer of the coating directly on the disc and a second deposition passage of the material in particle form to create a finishing layer on the base layer. The material in particle form deposited in the first deposition passage has a particle size greater than that deposited in the second deposition passage.

According to a particular implementation of the method, the material in particle form deposited in the first deposition passage has a particle size of 30 to 40 µm. The material in particle form deposited in the second deposition passage has a particle size of 5 to 20 µm.

In particular, the protective coating has a surface roughness Ra of 2.0 to 3.0 µm at the finishing layer.

In particular, the base layer of the coating has a thickness of 2/4 to 3/4 of the total thickness of the coating. The finishing layer has a thickness of 1/4 to 2/4 of the total thickness of the coating.

According to a possible implementation of the method, the entire disc is made of grey cast iron.

Alternatively, the entire disc is made of steel, preferably stainless steel AISI 316L or AISI 304L.

According to a possible implementation of the method, the protective coating covers the entire surface of the disc.

According to a particular implementation of the method, in the coating step b) the material in particle form is deposited in a differentiated manner on the surface of the disc at least in terms of thickness of the coating.

In particular, each main side of the disc is defined at least by a first annular portion, corresponding to a braking surface of the braking band, and by a second annular portion, which is more inward than the first and which defines the attachment zone of the disc to a vehicle. In the deposition step b) a protective coating covering at least both portions is made. The coating made on the first annular portion has a greater thickness than the coating made on the second portion.

In particular, the need expressed above is satisfied by a brake disc 1 for disc brakes comprising a braking band 2, made of grey cast iron or of steel and provided with two opposite braking surfaces 2a and 2b, each of which defines at least partially one of the two main sides of the disc. The disc 1 is provided with a protective coating 3 which covers at least one of the two braking surfaces of the braking band, The coating is composed of 70 to 95% in weight of tungsten carbide, 5% to 15% in weight of cobalt and of 1% to 10% in weight of chromium. The coating is obtained by depositing on the disc the components of the coating in particle form using HVOF technique, or HVAF technique (High Velocity Air Fuel) or KM technique (Kinetic Metallization) .

Preferably, the coating is obtained by depositing on the disc said components in particle form having a particle size of 5 to 40 µm.

According to a particular embodiment of the brake disc, the protective coating has a thickness of 20 µm to 80 µm.

According to the invention, the protective coating is composed of a base layer, which is associated directly to the disc and is made by means of a first deposition of the material in particle form, and of an upper finishing layer, which is placed on the base layer and is made by means of a second deposition passage of the material in particle form. The material in particle form deposited in the first deposition passage' has a larger particle size than that deposited in the second deposition passage.

In particular, the material in particle form deposited in the first deposition passage has a particle size of 30 to 40 µm, while the material in particle form deposited in the second deposition passage has a particle size of 5 to 20 µm.

In particular, the protective coating has a surface roughness Ra of 2.0 to 3.0 µm at the finishing layer.

According to a possible embodiment of the brake disc, the base layer of the coating has a thickness of 2/4 to 3/4 of the total thickness of the coating, while the finishing layer has a thickness of 1/4 to 2/4 of the total thickness of the coating.

According to a possible implementation of the method, the entire disc is made of grey cast iron.

Alternatively the entire disc is made of steel, preferably stainless steel AISI 316L or AISI 304L.

According to a possible embodiment of the brake disc, the protective coating covers the entire surface of the disc.

According to a preferred embodiment of the brake disc, the coating has different thicknesses in different areas of the surface of the disc.

In particular, each main side of the disc is defined at least by a first annular portion, corresponding to a braking surface of the braking band, and by a second annular portion, which is more inward than the first and which defines the attachment zone of the disc to the vehicle. The protective coating on the first annular portion has a greater thickness than the coating made on the second portion.

### DESCRIPTION OF THE DRAWINGS

Further characteristics and advantages of the present invention will be more clearly comprehensible from the description given below of its preferred and non-limiting embodiments, wherein:
-Figure 1 is a plan view from above of a disc brake according to one embodiment of the present invention; and
-Figure 2 is a cross-section view of the disc in Figure 1 according to the cross-section line II-II indicated therein.

The elements or parts of elements common to the embodiments described below will be indicated using the same reference numerals.

### DETAILED DESCRIPTION

With reference to the aforementioned figures, reference numeral 1 globally denotes a disc brake according to the present invention.

According to a general embodiment of the invention, shown in the appended drawings, the brake disc 1 comprises a braking band 2, made of grey cast iron or of steel and provided with two opposite braking surfaces 2a and 2b, each of which defines at least partially one of the two main sides of the disc.

The disc 1 is provided with a protective coating which covers at least one of the two braking surfaces of the braking band.

The coating is composed of70 to 95% in weight of tungsten carbide, 5% to 15% in weight of cobalt and of 1% to 10% in weight of chromium.

The coating is obtained by depositing on the disc the components of the coating in particle form using the HVOF technique, or HVAF technique (High Velocity Air Fuel) or KM technique (Kinetic Metallization) .

In order to simplify the description, the brake disc 1 will be described now simultaneously with the method according to the present invention. The brake disc 1 is made preferably, but not necessarily, using the method according to the invention which will now be described.

According to a general form of implementation of the method according to the invention, the method comprises the following operating steps:
a) providing a brake disc, comprising a braking band 2 provided with two opposite braking surfaces 2a and 2b, each of which defines at least partially one of the two main sides of the disc;
b) depositing a material in particle form on the disc to form a protective coating 3 which covers at least one of the two braking surfaces of the braking band.

Advantageously, the brake disc is provided with a portion suitable for attachment of the disc to a vehicle, consisting of an annular portion 4 positioned centrally to the disc 1 and concentric to the braking band 2. The attachment portion 4 supports the connection element 5 to the wheel hub (i.e. the bell). The bell may be made in one piece with the annular attachment portion or may be made separately and then attached by means of appropriate connection elements to the attachment portion.

he annular attachment portion 4 may be made of grey cast iron or steel or of another suitable material. The bell 5 too may be made of grey cast iron or steel or of another suitable material. In particular, the entire disc (i.e. braking band, attachment portion and bell) may be made of grey cast iron or steel.

Preferably, the braking band 2 is made by casting grey cast iron. In the same way, when made of grey cast iron, the attachment portion and/or bell may be made by casting.

The annular attachment portion may be made in one piece with the braking band or be made as a separate body, mechanically connected to the braking band.

Preferably, the deposition step b) is preceded by a step c) of preparing the surface which the protective coating is to be made on. In particular, the step c) of preparation consists of cleaning the surface with solvents suitable for removing oil or dirt. Preferably, the step c) of preparation may comprise abrasive action on the surface of the disc, for example sanding or grinding.

According to an essential aspect of the invention, the material in particle form is deposited on the disc using the HVOF technique, or HVAF technique (High Velocity Air Fuel) or KM technique (Kinetic Metallization).

These are three deposition techniques known to a person skilled in the art and will not therefore be described in detail.

HVOF is a spray deposition technique of powders which uses a spray device provided with a mixing and combustion chamber and a spray nozzle. Oxygen and fuel are fed to the chamber. The hot combustion gas which forms at pressures close to 1 MPA crosses the convergent-divergent nozzle, the material in powder reaching hypersonic speeds (i.e. over MACH 5). The material in powder to be deposited is injected in the flow of hot gas where it rapidly melts and is accelerated to speeds to the order of 1000 m/s. Once it has impacted the deposition surface, the molten material rapidly cools and thanks to the high kinetic energy impact forms a very dense, compact structure.

The HVAF deposition technique (High Velocity Air Fuel) is similar to the HVOF technique. The difference is that in the HVAF technique air instead of oxygen is fed to the combustion chamber. The temperatures involved are thus inferior to those of the HVOF. This permits greater control of the thermic alteration of the coating.

The KM deposition technique (Kinetic Metallization) is a solid state deposition process in which metal powders are sprayed through a two-phase sonic deposition nozzle which accelerates and gives a triboelectric charge to the metal particles inside a flow of inert gases. It is envisaged that thermal energy is supplied to the transport stream. In the process there is the transformation of the potential energy of the flow of compressed inert gases and of the thermic energy supplied, into kinetic energy of the powders. One accelerated to high speed and electrically charged, the particles are directed against the deposition surface. The collision of the metal particles at high speed causes an ample deformation of the particle (approximately 80% in the normal direction of impact). This deformation results in a huge increase in the surface area of the particles. Impact thus results in close contact of the particles and deposition surface, which leads to the formation of metal bonds and of a coating with a very dense and compact structure.

Advantageously, alternatively to the three deposition techniques listed above, having in common the fact of being high kinetic energy impact deposition techniques, other techniques using different deposition methods but able to generate coatings having a very dense and compact structure may also be used.

According to a further essential aspect of the invention, the material in particle form is composed of 70 to 95% in weight of tungsten carbide (WC), 5% to 15% in weight of cobalt (Co) and 1% to 10% in weight of chromium (Cr).

The combination of HVOF, HVAF or KM deposition technique and of the chemical components used for the formation of the coating makes it possible to obtain a protective coating with a high bonding force, which ensures a high degree of anchorage to the surface of the brake disc subjected to the treatment.

Advantageously the material in particle form does not contain free carbon (C), preferably not even in trace form. It has in fact been found that in the case of application of the coating using plasma spray techniques one cause of the detachment of the traditional protective coatings from the discs is the presence of free carbon in the protective coating. In fact, carbon tends to burn, combining with the oxygen incorporated in the protective coating being formed. This leads to the formation of micro bubbles inside the coating, which may prevent adequate adhesion of the coating to the disc, favouring the detachment thereof.

The coating further presents elevated resistance to wear. Tests conducted comparing a brake disc according to the invention with a traditional brake disc of grey cast iron have shown that the disc according to the invention has a significantly longer duration than the traditional disc in the same test conditions. Moreover it is significantly resistant to the atmospheric agents responsible for surface oxidation with the consequent formation of rust on the brake disc surface.

Preferably, the particle size of the particles of material in particle form is between 5 and 40 µm. The choice of such range of values makes it possible to give the coating characteristics of high density, hardness and limited porosity.

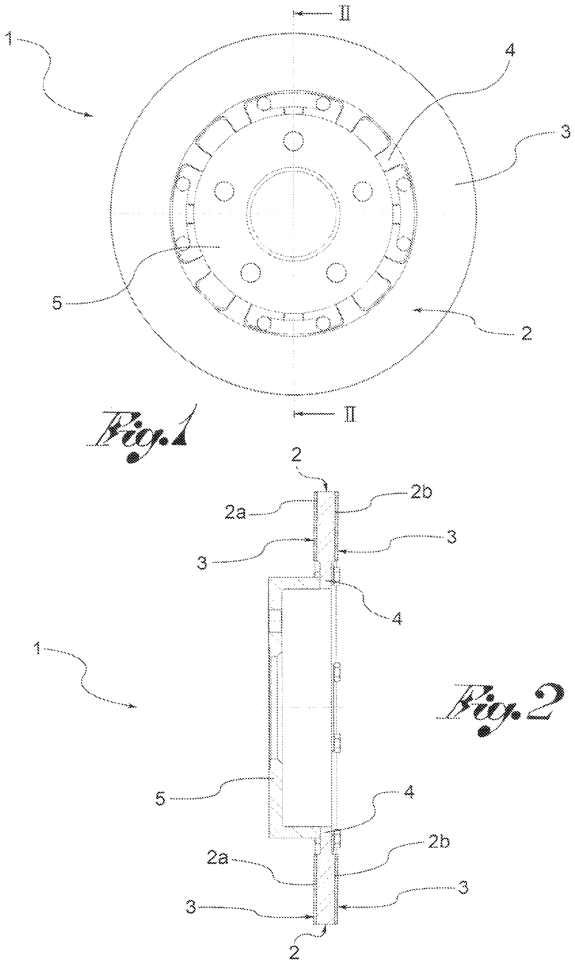

The coating 3 covers at least one of the two braking surfaces of the braking band, Preferably, as shown in Figure 2, the disc 1 is provided with a protective coating 3 which covers both the braking surfaces 2a and 2b of the braking band 2.

In particular, the coating 3 may cover the braking band only, on a single braking surface or on both.

According to embodiments not shown in the appended Figures, the protective coating 3 may also extend to other parts of the disc 1 such as the annular attachment portion 4 and the bell 5, so as to cover the entire surface of the disc 1. In particular, the coating may cover - in addition to the braking band - the attachment portion only or the bell only. Such choice is dictated by purely aesthetic considerations, so as to have a homogeneous colour and /or finish all over the disc or on portions thereof.

Preferably, the protective coating has a thickness of 20 µm to 80 µm.

Advantageously, the deposition of the material in particle form for forming the coating may be performed in a differentiated manner on the surface of the disc at least in terms of thickness of the coating.

Preferably, the protective coating made on the braking band has a greater thickness than that made on other portions of the disc. The coating on different portions to that of the braking band may have thicknesses of 20 to 80 µm.

On the braking band, the protective coating may be made with the same thickness on both the opposite braking surfaces. Alternative solutions may be provided for wherein the coating is made differentiating the thicknesses on the two braking surfaces of the braking band.

According to a particularly preferred implementation of the method, the deposition step b) comprises two or more separate deposition passages of the material in particle form on the same surface to form the protective coating.

More specifically, the aforesaid deposition step b) comprises:
- a first deposition passage of the material in particle form to create a base layer of the coating directly on the disc; and
- a second deposition passage of the material in particle form to create a finishing layer on the base layer.

The division of the deposition step into two or more passages in particular permits a differentiation at least of the particle size of the material in particle form used in the different passages. This makes the deposition step more flexible.

Advantageously, the material in particle form deposited in the first deposition passage has a larger particle size than that deposited in the second deposition passage. In particular, the material in particle form deposited in the first deposition passage has a particle size of 30 to 40 µm, while the material in particle form deposited in the second deposition passage has a particle size of 5 to 20 µm.

The realisation of the coating in two separate deposition passages, using a coarser particle size for the base layer and a finer particle size for the formation of the finishing layer, makes it possible to obtain a coating which already at the end of the deposition has the desired surface finish characteristics without the need to rectify and /or perform other finishing operations on the surface of the coating. The particles deposited in the second passage go to fill the coarse surface roughness of the base layer. Advantageously, the level of surface finishing of the coating may be adjusted by adjusting the particle size of the particles deposited in the second passage.

In particular, using particles having a particle size of 30 to 40 µm for the first passage and particles having a particle size of 5 to 20 µm for the second passage, the protective coating has a surface roughness Ra of 2.0 to 3.0 µm at the finishing layer.

Together, the combination of a HVOF, HVAF or KM deposition technique of the material in particle form, of the chemical components used and of the deposition method in various passages makes it possible to obtain a coating with a limited level of surface roughness suitable for the purposes of utilisation of the brake disc 1.

Preferably, the base layer of the coating has a thickness of 2/4 to 3/4 of the total thickness of the coating, while the finishing layer has a thickness of 1/4 to 2/4 of the total thickness of the coating.

As may be appreciated from the description, the brake disc according to the invention makes it possible to overcome the drawbacks of the prior art.

The brake disc 1 according to the invention has high resistance to wear.

In particular, the disc 1 is provided with a protective coating (which covers at least the braking band) having:
- a high bonding force, which ensures a high degree of anchorage to the disc;
- high resistance to wear;
- limited surface roughness;
- high density;
- elevated hardness; and
- limited porosity.

The brake disc 1 may be designed with a reduced thickness compared to standard discs, given that it is subject to much less wear than a standard disc, with a consequent saving in weight. The brake disc 1 is, in addition, economical to produce. The weight aspect of the disc is particularly felt by car manufacturers, in that having lighter discs permits a reduction in the weight on the front and rear axles of the vehicle. In general, a reduction in weigh leads to a reduced consumption of hydrocarbons for motor propulsion, with consequent reduced emission into the atmosphere of gases such as carbon monoxide and dioxide, and thus reduced environmental impact compared to vehicles provided with standard brake discs heavier than those of the present invention.

A person skilled in the art may make numerous modifications and variations to the method of making a brake disc and to the brake discs described above so as to satisfy contingent and specific requirements while remaining within the sphere of protection of the invention as defined by the following claims.

## Claims

1. Method of making a brake disc comprising the following operating steps:
a) providing a disc brake, comprising a braking band (2), made in grey cast iron or in steel and provided with two opposite braking surfaces (2a, 2b), each of which defines at least partially one of the two main sides of the disc;
b) depositing a material in particle form on the disc using HVOF (High Velocity Oxygen Fuel) technique, or HVAF (High Velocity Air Fuel) technique or KM (Kinetic Metallization) technique to form a protective coating (3) which covers at least one of the two braking surfaces of the braking band, said material in particle form being composed of 70 to 95% in weigh of tungsten carbide, 5% to 15% in weight of cobalt and from 1% to 10% in weight of chromium,
wherein the deposition step b) comprises two or more separate deposition passages of the material in particle form on the same surface to form the protective coating, the deposition step b) comprising a first deposition passage of the material in particle form to create a base layer of the coating directly on the disc and a second deposition passage of the material in particle form to create a finishing layer on the base layer, the material in particle form deposited in the first deposition passage having a particle size greater than that deposited in the second deposition passage.

2. Method according to claim 1, wherein the particle size of the particles of said material in particle form is between 5 and 40 µm.

3. Method according to claim 1 or 2, wherein the protective coating has a thickness of 20 µm to 80 µm.

4. Method according to one or more of the previous claims, wherein the material in particle form deposited in the first deposition passage has a particle size of 30 to 40 µm, while the material in particle form deposited in the second deposition passage has a particle size of 5 to 20 µm.

5. Method according to one or more of the previous claims, wherein the protective coating has a surface roughness Ra of 2.0 to 3.0 µm at the finishing layer.

6. Method according to one or more of the previous claims, wherein the opposite braking surfaces (2a, 2b) are made in grey cast iron.

7. Method according to one or more of the previous claims, wherein the opposite braking surfaces (2a, 2b) are made in steel.

8. Method according to one or more of the previous claims, wherein in said deposition step b) the material in particle form is deposited in a differentiated manner on the surface of the disc at least in terms of thickness of the coating.

9. Method according to any of the previous claims, wherein each main side of the disc is defined at least by a first annular portion (2), corresponding to a braking surface of the braking band, and by a second annular portion (4), which is more inward than the first and which defines the attachment zone of the disc to a vehicle, in said deposition step b) a protective coating covering of at least both portions being made, the coating made on said first annular portion having a greater thickness than the coating made on said second portion.

10. Brake disc for disc brake, comprising a braking band (2), made in grey cast iron or in steel and provided with two opposite braking surfaces (2a, 2b), each of which defines at least partially one of the two main sides of the disc (1), said disc being provided with a protective coating (3) which covers at least one of the two braking surfaces of the braking band, said coating being composed of 70 to 95% in weight of tungsten carbide, 5% or 15% in weight of cobalt and from 1% to 10% in weight of chromium, said coating being obtained by depositing on the disc the components of the coating in particle form using the HVOF technique or HVAF technique or KM technique,
wherein the protective coating is composed of a base layer, which is associated directly to the disc and is made by means of a first deposition of the material in particle form, and of a finishing layer, which is placed on the base layer and is made by means of a second deposition passage of the material in particle form, the material in particle form deposited in the first deposition passage having a greater particle size than that deposited in the second deposition passage.

11. Brake disc according to claim 10, wherein the coating is obtained by depositing on the disc said components in particle form having a particle size of 5 to 40 µm.

12. Brake disc according to claim 10 or 11, wherein the protective coating has a thickness of 20 µm to 80 µm.

13. Brake disc according to one or more of the claims from 10 to 12, wherein the protective coating has a surface roughness Ra of 2.0 to 3.0 µm at the finishing layer.

14. Brake disc according to one or more of the claims from 10 to 13, wherein the coating has different thicknesses in different areas of the surface of the disc.

## Patentansprüche

1. Verfahren zur Herstellung ein Bremsscheibe, das die folgenden Betriebsschritte umfasst:
a) Bereitstellen einer Scheibenbremse mit einem Bremsband (2), die bzw. das aus Grauguss oder Stahl gefertigt und mit zwei gegenüberliegenden Bremsflächen (2a, 2b) versehen ist, von denen jede zumindest teilweise eine der beiden Hauptseiten der Scheibe bildet;
b) Abscheiden eines Materials in Partikelform auf der Scheibe unter Verwendung einer HVOF-Technik (Hochgeschwindigkeits-Sauerstoff-Brennstoff-Technik) oder einer HVAF-Technik (Hochgeschwindigkeits-Luft-Brennstoff-Technik) oder einer KM-Technik (kinetischen Metallbeschichtungstechnik) zur Erzeugung einer Schutzbeschichtung (3), die mindestens eine der beiden Bremsflächen des Bremsbands bedeckt, wobei das Material in Partikelform aus 70 bis 95 Gew.-% of Wolframkarbid, 5 bis 15 Gew.-% Kobalt und 1 bis 10 Gew.-% Chrom zusammengesetzt ist,
wobei der Abscheidungsschritt b) zwei oder mehr separate Abscheidungsdurchgänge des Materials in Partikelform auf der gleichen Oberfläche zur Erzeugung der Schutzbeschichtung umfasst, der Abscheidungsschritt b) einen ersten Abscheidungsdurchgang des Materials in Partikelform zur Erzeugung einer Grundschicht der Beschichtung direkt auf der Scheibe und einen zweiten Abscheidungsdurchgang des Materials in Partikelform zur Erzeugung einer Fertigstellungsschicht auf der Grundschicht umfasst und das im ersten Abscheidungsdurchgang abgeschiedene Material in Partikelform eine Partikelgröße aufweist, die größer als die im zweiten Abscheidungsdurchgang abgeschiedene ist.

2. Verfahren nach Anspruch 1, wobei die Partikelgröße der Partikel des Materials in Partikelform zwischen 5 und 40 µm beträgt.

3. Verfahren nach Anspruch 1 oder 2, wobei die Schutzbeschichtung eine Dicke von 20 µm bis 80 µm aufweist.

4. Verfahren nach einem oder mehreren der vorhergehenden Ansprüche, wobei das im ersten Abscheidungsdurchgang abgeschiedene Material in Partikelform eine Partikelgröße von 30 bis 40 µm aufweist, wogegen das im zweiten Abscheidungsdurchgang abgeschiedene Material in Partikelform eine Partikelgröße von 5 bis 20 µm aufweist.

5. Verfahren nach einem oder mehreren der vorhergehenden Ansprüche, wobei die Schutzbeschichtung an der Fertigstellungsschicht eine Oberflächenrauigkeit Ra of 2,0 bis 3,0 µm aufweist.

6. Verfahren nach einem oder mehreren der vorhergehenden Ansprüche, wobei die gegenüberliegenden Bremsflächen (2a, 2b) aus Grauguss gefertigt sind.

7. Verfahren nach einem oder mehreren der Ansprüche, wobei die gegenüberliegenden Bremsflächen (2a, 2b) aus Stahl gefertigt sind.

8. Verfahren nach einem oder mehreren der Ansprüche, wobei in dem Abscheidungsschritt b) das Material in Partikelform zumindest hinsichtlich der Dicke der Beschichtung auf eine differenzierte Weise auf der Oberfläche der Scheibe abgeschieden wird.

9. Verfahren nach einem der vorhergehenden Ansprüche, wobei jede Hauptseite der Scheibe zumindest durch einen ersten ringförmigen Abschnitt (2), der einer Bremsfläche des Bremsbands entspricht, und einen zweiten ringförmigen Abschnitt (4) definiert ist, der weiter innen liegt als der erste und der die Befestigungszone der Scheibe an einem Fahrzeug definiert, in dem Abscheidungsschritt b) eine Schutzbeschichtung erzeugt wird, die zumindest beide Abschnitte bedeckt, die auf dem ersten ringförmigen Abschnitt erzeugte Beschichtung eine größere Dicke aufweist als die auf dem zweiten Abschnitt erzeugte Beschichtung.

10. Bremsscheibe für eine Scheibenbremse, die ein Bremsband (2) umfasst, die bzw. das aus Grauguss oder Stahl gefertigt und mit zwei gegenüberliegenden Bremsflächen (2a, 2b) versehen ist, von denen jede zumindest teilweise eine der beiden Hauptseiten der Scheibe (1) definiert, wobei die Scheibe mit einer Schutzbeschichtung (3) versehen ist, die zumindest eine der beiden Bremsflächen des Bremsbands bedeckt, wobei die Beschichtung aus 70 bis 95 Ges.-% Wolframkarbid, 5 oder 15 Gew.-% Kobalt und 1% bis 10 Gew.-% Chrom zusammengesetzt ist, die Beschichtung durch Abscheiden der Bestandteile der Beschichtung in Partikelform auf der Scheibe unter Verwendung der HVOF-Technik oder HVAF-Technik oder KM-Technik erhalten wird,
wobei die Schutzbeschichtung aus einer Grundschicht, die direkt mit der Scheibe verbunden ist und mittels einer ersten Abscheidung des Materials in Partikelform erzeugt wird, und einer Fertigstellungsschicht zusammengesetzt ist, die auf der Grundschicht angeordnet ist und mittels eines zweiten Abscheidungsdurchgangs des Materials in Partikelform erzeugt wird, und das im ersten Abscheidungsdurchgang abgeschiedene Material in Partikelform eine größere Partikelgröße als das im zweiten Abscheidungsdurchgang abgeschiedene aufweist.

11. Bremsscheibe nach Anspruch 10, wobei die Beschichtung durch Abscheiden der Bestandteile in Partikelform mit einer Partikelgröße von 5 bis 40 µm auf der Scheibe erhalten wird.

12. Bremsscheibe nach Anspruch 10 oder 11, wobei die Schutzbeschichtung eine Dicke von 20 µm bis 80 µm aufweist.

13. Bremsscheibe nach einem oder mehreren der Ansprüche 10 bis 12, wobei die Schutzbeschichtung an der Fertigstellungsschicht eine Oberflächenrauigkeit Ra von 2,0 bis 3,0 µm aufweist.

14. Bremsscheibe nach einem oder mehreren der Ansprüche 10 bis 13, wobei die Beschichtung in unterschiedlichen Bereichen der Oberfläche der Scheibe unterschiedliche Dicken aufweist.

## Revendications

1. Procédé de fabrication d'un disque de frein comprenant les étapes opérationnelles suivantes :
a) fourniture d'un frein à disque comprenant une bande de freinage (2) réalisée en fonte grise ou en acier et dotée de deux surfaces de freinage en regard (2a, 2b), dont chacune définit au moins en partie un des deux côtés principaux du disque ;
b) dépôt d'un matériau sous la forme de particule sur le disque en utilisant la technique HVOF (combustible et oxygène haute vitesse) ou la technique HVAF (combustible et air haute vitesse) ou la technique KM (métallisation cinétique) pour former un revêtement protecteur (3) qui couvre au moins une des deux surfaces de freinage de la bande de freinage, ledit matériau sous la forme de particule étant composé de 70 à 95 % en poids de carbure de tungstène, 5 à 15 % en poids de cobalt et de 1 à 10 % en poids de chrome,
dans lequel l'étape de dépôt b) comprend deux ou plus passages de dépôt séparés du matériau sous la forme de particule sur la même surface pour former le revêtement protecteur, l'étape de dépôt (b) comprenant un premier passage de dépôt du matériau sous la forme de particule pour créer une couche de base du revêtement directement sur le disque et un second passage de dépôt du matériau sous la forme de particule pour créer une couche de finissage sur la couche de base, le matériau sous la forme de particule déposé dans le premier passage de dépôt présentant une taille de particule plus grande que celle déposée dans le second passage de dépôt.

2. Procédé selon la revendication 1, dans lequel la taille de particule des particules dudit matériau sous la forme de particule est entre 5 et 40 µm.

3. Procédé selon la revendication 1 ou 2, dans lequel le revêtement protecteur a une épaisseur de 20 µm à 80 µm.

4. Procédé selon l'une ou plusieurs des revendications précédentes, dans lequel le matériau sous la forme de particule déposé dans le premier passage de dépôt a une taille de particule de 30 à 40 µm, alors que le matériau sous la forme de particule déposé dans le second passage de dépôt a une taille de particule de 5 à 20 µm.

5. Procédé selon l'une ou plusieurs des revendications précédentes, dans lequel le revêtement protecteur a une rugosité de surface Ra de 2,0 à 3,0 µm sur la couche de finissage.

6. Procédé selon l'une ou plusieurs des revendications précédentes, dans lequel les surfaces de freinage en regard (2a, 2b) sont réalisées en fonte grise.

7. Procédé selon l'une ou plusieurs des revendications précédentes, dans lequel les surfaces de freinage en regard (2a, 2b) sont réalisées en acier.

8. Procédé selon l'une ou plusieurs des revendications précédentes, dans lequel dans ladite étape de dépôt b), le matériau sous la forme de particule est déposé de manière différentiée sur la surface du disque au moins en termes d'épaisseur du revêtement.

9. Procédé selon l'une quelconque des revendications précédentes, dans lequel chaque côté principal du disque est défini au moins par une première partie annulaire (2), correspondant à une surface de freinage de la bande de freinage, et par une seconde partie annulaire (4) qui est plus vers l'intérieur que la première et qui définit la zone d'attache du disque à un véhicule, dans ladite étape de dépôt b) une couverture du revêtement protecteur d'au moins les deux parties étant réalisée, le revêtement réalisé sur ladite première partie annulaire présentant une épaisseur plus grande que le revêtement réalisé sur ladite seconde partie.

10. Disque de frein pour frein à disque comprenant une bande de freinage (2) réalisée en fonte grise, ou en acier et dotée de deux surfaces de freinage en regard (2a, 2b), dont chacune définit au moins en partie un des deux côtés principaux du disque (1), ledit disque étant doté d'un revêtement protecteur (3) qui couvre au moins une des deux surfaces de freinage de la bande de freinage, ledit revêtement étant composé de 70 à 95 % en poids de carbure de tungstène, 5 à 15 % en poids de cobalt et 1 à 10 % en poids de chrome, ledit revêtement étant obtenu par dépôt sur le disque des composants du revêtement sous la forme de particule en utilisant la technique HVOF ou technique HVAF ou technique KM,
dans lequel le revêtement protecteur est composé d'une couche de base qui est associée directement au disque et est réalisée à l'aide d'un premier dépôt du matériau sous la forme de particule, et d'une couche de finissage, qui est placée sur la couche de base et est réalisée à l'aide d'un second passage de dépôt du matériau sous la forme de particule, le matériau sous la forme de particule déposé dans le premier passage de dépôt présentant une taille de particule plus grande que celle déposée dans le second passage de dépôt.

11. Disque de frein selon la revendication 10, dans lequel le revêtement est obtenu par dépôt sur le disque desdits composants sous la forme de particule présentant une taille de particule de 5 à 40 µm.

12. Disque de frein selon la revendication 10 ou 11, dans lequel le revêtement protecteur a une épaisseur de 20 µm à 80 µm.

13. Disque de frein selon l'une ou plusieurs des revendications 10 à 12, dans lequel le revêtement protecteur a une rugosité de surface Ra de 2,0 à 3,0 µm sur la couche de finissage.

14. Disque de frein selon l'une ou plusieurs des revendications 10 à 13, dans lequel le revêtement a différentes épaisseurs dans différentes zones de la surface du disque.
